Europäisches Patentamt

European Patent Office

Office européen des brevets

(19)

(11) EP 0 882 685 B1

(12) FASCICULE DE BREVET EUROPEEN

(45) Date de publication et mention
de la délivrance du brevet:
**18.04.2001 Bulletin 2001/16**

(51) Int Cl.$^7$: **C03C 3/087**

(21) Numéro de dépôt: **98112846.5**

(22) Date de dépôt: **13.10.1995**

(54) **Compositions de verre silico-sodo-calciques et leurs applications**

Kalknatron-Silikatglaszusammensetzungen und deren Anwendungen

Soda-lime-silica glass compositions and uses thereof

(84) Etats contractants désignés:
**AT BE DE DK ES FR GB IE IT NL SE**

(30) Priorité: **13.10.1994 FR 9412210**
**30.11.1994 FR 9414352**

(43) Date de publication de la demande:
**09.12.1998 Bulletin 1998/50**

(62) Numéro(s) de document de la (des) demande(s)
initiale(s) en application de l'article 76 CBE:
**95935488.7 / 0 734 356**

(73) Titulaire: **SAINT-GOBAIN VITRAGE**
**92400 Courbevoie (FR)**

(72) Inventeurs:
• **Koch, Stéphanie**
**Mountain View, CA 94040 (US)**
• **Jousse, Didier**
**95320 Saint-Leu La Foret (FR)**
• **Gy, René**
**93140 Bondy (FR)**
• **Courtemanche, Gilles**
**75013 Paris (FR)**

(74) Mandataire: **Breton, Jean-Claude**
**SAINT-GOBAIN RECHERCHE**
**39, quai Lucien Lefranc**
**93300 Aubervilliers Cedex (FR)**

(56) Documents cités:
**EP-A- 0 592 237      US-A- 4 015 966**

**Description**

La présente invention a pour objet des compositions de verre aptes à être transformées en ruban de verre dans lequel peuvent être découpées des plaques, et qui résistent bien à la chaleur. Ces plaques peuvent être utilisées pour réaliser des vitrages anti-feu ou servir de substrats pour la fabrication d'écrans plasmas, d'écrans électroluminescents et d'écrans à cathode froide (Field-emission-displays).

Le verre utilisé actuellement pour réaliser de tels substrats est un verre appartenant à la famille des verres silico-sodo-calciques, couramment utilisés pour fabriquer des vitrages destinés aux bâtiments ou aux véhicules automobiles. Si ce type de verre donne globalement satisfaction quant à sa résistance chimique, à la planéité et aux défauts qu'il présente, sa tenue en température laisse parfois à désirer.

Lors de la fabrication des écrans émissifs, le substrat est soumis à plusieurs traitements thermiques qui ont pour but de stabiliser les dimensions dudit substrat et de fixer une série de couches de différents composés, tels que des émaux, déposées sur sa surface. La fixation de ces couches d'épaisseurs plus ou moins importantes, nécessite que le substrat soit porté à des températures supérieures à 550°C. Si le coefficient de dilatation du verre silico-sodo-calcique utilisé est du même ordre de grandeur que celui des composés déposés sur sa surface, sa tenue en température est insuffisante et il est nécessaire de le poser sur une dalle rectifiée lors des traitements thermiques pour éviter toute déformation.

Les verres utilisés pour la fabrication de vitrages anti-feu appartiennent généralement à la famille des verres borosilicates. Ces verres, qui présentent une très bonne résistance à la chaleur et au choc thermique, se caractérisent généralement par un faible coefficient de dilatation. Cette dernière caractéristique ne permet pas de développer dans ces verres de fortes contraintes par trempe thermique, et l'augmentation de leur résistance mécanique par ce moyen s'en trouve limitée.

La présente invention se propose de remédier aux limitations qu'impose l'emploi de ces verres connus pour l'une ou l'autre des applications indiquées précédemment.

Ainsi, la présente invention a pour objet une composition de verre permettant de fabriquer une plaque ou un substrat dont la déformation est pratiquement nulle lorsqu'il est soumis à des températures comprises entre 550 et 600°C.

La présente invention a notamment pour objet une composition de verre permettant de fabriquer une plaque au sein de laquelle peuvent s'établir par trempe thermique, des contraintes au moins aussi élevées que celles prenant naissance dans une plaque de verre silico-sodo-calcique ordinaire.

La présente invention a pour objet une composition de verre permettant de fabriquer un substrat dont la déperdition superficielle en ions alcalins soit inférieure à celle observée sur un substrat réalisé à partir d'un verre silico-sodo-calcique ordinaire.

La présente invention a également pour objet une composition de verre susceptible d'être fondue et transformée en ruban de verre flotté sur un bain métallique dans des conditions de températures voisines de celles d'un verre silico-sodo-calcique ordinaire.

Ces buts sont atteints grâce à une composition de verre qui comprend les constituants ci-après dans les proportions pondérales suivantes :

| | |
|---|---|
| $SiO_2$ | 45 à 63 % |
| $Al_2O_3$ | 0 à 18 % |
| $ZrO_2$ | 6,5 à 20 % |
| $Na_2O$ | 2 à 12 % |
| $K_2O$ | 3,5 à 9 % |
| CaO | 1 à 13 % |
| MgO | 0 à 8 % |

la somme des teneurs des oxydes $SiO_2$, $Al_2O_3$ et $ZrO_2$ demeurant égale ou inférieure à 70%, la somme des teneurs des oxydes alcalins $Na_2O$ et $K_2O$ étant égale ou supérieure à 8%, ladite composition comprenant éventuellement les oxydes BaO et/ou SrO dans des proportions telles que :

$$11\% \leq MgO + CaO + BaO + SrO \leq 24\%$$

ladite composition présentant une température inférieure de recuisson (strain point) égale ou supérieure à 530°C et un coefficient de dilatation ($\alpha_{25-\ 300°C}$) compris entre 80 et $95.10^{-7}$/°C.

Il est communément admis que le verre n'a plus aucun comportement visqueux au-dessous d'une température caractéristique appelée température inférieure de recuisson (strain point), qui correspond à une viscosité de l'ordre de $10^{14,5}$ poises. De ce fait, cette température est un point de repère intéressant pour évaluer la tenue en température d'un verre. Grâce à la combinaison des constituants telle qu'elle résulte de la définition de l'invention, les verres répondant à cette définition possèdent une température inférieure de recuisson supérieure d'au moins 25°C environ à celle d'un verre silico-sodo-calcique classique. Pour la majorité des verres selon l'invention cet écart est d'au moins 45 à 50°C.

Cette combinaison de constituants permet également d'obtenir des verres dont le coefficient de dilatation reste du même ordre de grandeur que celui d'un verre silico-sodo-calcique traditionnel.

Les verres selon l'invention présentent également l'avantage de pouvoir être fondus et transformés en ruban de verre à des températures voisines de celles adoptées pour la fabrication d'un verre silico-sodo-calcique classique.

Dans cette famille de verres la teneur en $SiO_2$ est fonction de la présence d'autres oxydes également difficiles à fondre comme $ZrO_2$ et, éventuellement, $Al_2O_3$. Ainsi leur teneur maximale en $SiO_2$ ne doit pas excéder environ 63% ; au-delà, la fusion du mélange vitrifiable et l'affinage du verre nécessitent des températures élevées qui provoquent une usure accélérée des réfractaires des fours. Par ailleurs, il a été observé, dans le cadre de l'invention, que l'augmentation de la teneur en $SiO_2$ ne favorise pas l'élévation de la température inférieure de recuisson du verre. Au-dessous de 45% en poids de $SiO_2$, la stabilité des verres selon l'invention est insuffisante.

L'alumine joue un rôle de stabilisant. Cet oxyde augmente dans une certaine mesure la résistance chimique du verre et favorise l'augmentation de la température inférieure de recuisson. Le pourcentage de $Al_2O_3$ ne doit pas excéder 20% sous peine de rendre trop difficile la fusion et d'augmenter dans des proportions inacceptables la viscosité du verre aux températures élevées.

$ZrO_2$ joue également un rôle de stabilisant. Cet oxyde augmente dans une certaine mesure la résistance chimique du verre et favorise l'augmentation de la température inférieure de recuisson. Le pourcentage de $ZrO_2$ ne doit pas excéder 20% sous peine de rendre trop difficile la fusion. Si cet oxyde est difficile à fondre, il présente l'avantage de ne pas augmenter la viscosité des verres selon l'invention aux températures élevées. Cela permet d'éviter d'introduire dans ces verres des oxydes tel que $B_2O_3$, dont l'un des effets est de réduire la viscosité du verre, ou d'augmenter la teneur des oxydes alcalins qui ont le même effet.

D'une façon globale la fusion des verres selon l'invention reste dans des limites de températures acceptables, sous réserve que la somme des teneurs des oxydes $SiO_2$, $Al_2O_3$ et $ZrO_2$ demeure égale ou inférieure à 70%. Par limites acceptables, il faut entendre que la température du verre correspondant à $\log \eta = 1,6$ ne dépasse pas environ 1630°C et de préférence 1590°C.

les verres selon invention comprennent de préférence les constituants ci-après dans les proportions pondérales suivantes:

| $SiO_2$ | 45 à 63 % |
|---|---|
| $Al_2O_3$ | 0 à 18 % |
| $ZrO_2$ | 6,5 à 20 % |
| $Na_2O$ | 4 à 12 % |
| $K_2O$ | 3,5 à 7 % |
| CaO | 1 à 13 % |
| MgO | 1 à 8 % |

la somme des teneurs des oxydes $SiO_2$, $Al_2O_3$ et $ZrO_2$ demeurant égale ou inférieure à 70%, la somme des teneurs des oxydes alcalins $Na_2O$ et $K_2O$ étant égale ou supérieure à 8%, ladite composition comprenant éventuellement les oxydes BaO et/ou SrO dans des proportions telles que :

$$11\% \leq MgO + CaO + BaO + SrO \leq 24\%$$

lesdites compositions de verre présentant une température inférieure de recuisson (strain point) égale ou supérieure à 550°C et un coefficient de dilatation ($\alpha_{25\text{-}300°C}$) compris entre 85 et $95.10^{-7}/°C$.

Les verres selon l'invention qui fondent le plus facilement, dont les viscosités se prêtent le mieux au flottage du verre sur un bain de métal fondu, et qui présentent les températures inférieures de recuisson les plus élevées, comprennent entre 45 et 59% de $SiO_2$.

Dans les verres selon l'invention la somme des oxydes $Al_2O_3$ et $ZrO_2$ est avantageusement égale ou supérieure à 8%, de préférence, comprise entre 8 et 22%. Leur teneur en $ZrO_2$ est avantageusement comprise entre 8 et 15%.

La présence d'une teneur même élevée en $ZrO_2$ dans les verres de l'invention n'a pas pour effet d'augmenter leur viscosité aux températures élevées.

Les verres selon l'invention présentent également l'avantage d'être bien adaptés aux techniques de fusion associées au procédé de flottage du verre sur un bain de métal fondu. En effet, il est apparu que ces verres conduisent à une faible corrosion des réfractaires, du type AZS (alumine-zircone-silice), habituellement utilisés dans ce type de four. Ces verres garantissent ainsi une optimisation de la durée d'utilisation du four.

Les compositions de verre préférées selon l'invention comprennent les constituants ci-après dans les proportions pondérales suivantes :

| | |
|---|---|
| $SiO_2$ | 45 à 59 % |
| $ZrO_2$ | 8 à 15 % |
| $Al_2O_3$ | 0 à 10 % |
| $Na_2O$ | 4 à 10 % |
| $K_2O$ | 3,5 à 7 % |
| CaO | 1 à 12% |
| MgO | 1 à 7 % |

la somme des teneurs des oxydes $SiO_2$, $Al_2O_3$ et $ZrO_2$ demeurant inférieure ou égale à 70%, la somme des teneurs des oxydes alcalins étant égale ou supérieure à 10%, lesdites compositions comprenant éventuellement les oxydes BaO et/ou SrO dans des proportions telles que :

$$14\% \leq MgO + CaO + BaO + SrO \leq 22\%$$

lesdites compositions de verre présentant une température inférieure de recuisson (strain point) égale ou supérieure à 550°C et un coefficient de dilatation ($\alpha_{25\text{-}300°C}$) compris entre 82 et $95.10^{-7}/°C$.

D'une façon générale, l'influence des autres oxydes sur l'aptitude des verres selon l'invention a être fondus et flottés sur un bain métallique, ainsi que sur leur propriétés, est la suivante :

Les oxydes $Na_2O$ et $K_2O$ permettent de maintenir la température de fusion des verres selon l'invention et leurs viscosités aux températures élevées dans les limites indiquées précédemment. Pour ce faire, la somme des teneurs de ces oxydes demeure égale ou supérieure à environ 8%. Par rapport à un verre silico-sodo-calcique ordinaire la présence simultanée de ces deux oxydes dans les verres selon l'invention, parfois dans des proportions voisines, permet d'augmenter considérablement leur résistance chimique, plus précisément leur résistance hydrolytique, ainsi que leur résistivité. L'augmentation de la résistivité des verres est intéressante dans certaines applications, plus précisément lorsqu'ils servent de substrat pour les écrans à cathode froide. Dans ces écrans prennent naissance des champs électriques de surface qui provoquent une concentration localisée d'électrons. Cette concentration peut provoquer en réaction une migration indésirable des alcalins si la résistivité du verre est insuffisante, comme dans le cas d'un verre silico-sodo-calcique ordinaire.

Les oxydes alcalino-terreux introduits dans les verres selon l'invention ont pour effet globalement d'élever la température inférieure de recuisson, c'est la raison pour laquelle la somme de leurs teneurs pondérales doit être au moins égale à 11%. Au-delà de 24% environ l'aptitude des verres à dévitrifier peut s'amplifier dans des proportions incompatibles avec le procédé de flottage sur bain métallique. Afin de maintenir la dévitrification des verres dans des limites acceptables leurs teneurs pondérales en CaO et MgO ne doivent pas excéder respectivement 13 et 8%. La teneur en MgO est, de préférence, égale ou inférieure à 5%.

MgO, CaO et à un degré moindre SrO permettent d'élever la température inférieure de recuisson ; BaO et SrO permettent d'augmenter la résistance chimique des verres selon l'invention ainsi que leur résistivité. BaO a également pour effet de diminuer la température de fusion ainsi que la viscosité des verres aux températures élevées.

Les avantages présentés par les compositions de verre selon l'invention seront mieux appréciés à travers les exemples rassemblés dans le tableau en annexe.

Le verre n° 1 correspond à une composition de verre silico-sodo-calcique classique utilisée pour fabriquer un ruban de verre selon le procédé du verre flotté sur un bain de métal fondu ; le verre n° 2 correspond a un verre borosilicate connu. Les verres n° 3 à 7 illustrent les compositions de verre selon l'invention. La température inférieure de recuisson $T_1$, le coefficient de dilatation, les viscosités et la température de liquidus ainsi que la résistance hydrolytique (DGG) et la résistivité ont été mesurés selon des méthodes bien connues de l'homme de l'art.

Comme le montre les exemples, les caractéristiques de viscosité et de liquidus des verres selon l'invention sont suffisamment proches de celles du verre de référence pour pouvoir être élaborés et transformés en ruban pratiquement dans les mêmes conditions que ce dernier.

Ainsi, par la technique du verre flotté, les verres selon l'invention sont obtenus sous la forme d'un ruban d'épaisseur strictement contrôlée, qui peut varier de 0,5 mm à 10 mm. Des feuilles sont découpées au format désiré dans ledit ruban, avant d'être soumise à un traitement thermique ayant pour objet de stabiliser les dimensions desdites feuilles. Ces feuilles sont alors prêtes pour servir de substrat qui supportera le dépôt de différentes couches et les traitements thermiques qu'exigent leur fixation.

Ces feuilles ou plaques, après avoir subi une trempe thermique, peuvent être associées en vitrages isolants ou en vitrages feuilletés. Ces vitrages isolants sont constitués de plaques associées deux à deux à l'aide d'un profilé intercalaire collé et leur technique de montage dans le châssis qui les supporte est telle que lors de l'exposition à des flammes, le bord de la plaque du côté du feu est exposé instantanément ou, en tous cas, à bref délai, au rayonnement thermique et aux flammes elles-mêmes, ce qui permet de limiter les contraintes thermiques qui s'établissent habituellement dans une plaque lorsqu'elle est davantage chauffée au centre que sur ses bords. L'association d'une trempe thermique de bonne qualité et du montage en question permet à un tel vitrage de rester en place suffisamment longtemps pour satisfaire aux normes en vigueur.

Les vitrages feuilletés sont réalisés par l'association de plaques à l'aide d'un film plastique intercalaire ; en général, les plaques de verre utilisées sont aussi trempées thermiquement.

## TABLEAU

|  | N° 1 | N° 2 | N° 3 | N° 4* | N° 5* | N° 6* | N° 7* |
|---|---|---|---|---|---|---|---|
| $SiO_2$ | 71,7 | 81,0 | 54,6 | 52,0 | 53,05 | 58,0 | 60,0 |
| $Al_2O_3$ | 0,6 | 2,2 | 3,0 | 4,0 | 3,25 | 3,0 | 3,0 |
| $ZrO_2$ | | | 10,0 | 11,0 | 9,25 | 7,5 | 7,0 |
| $B_2O_3$ | | 13 | | | | | |
| $Na_2O$ | 13,9 | 3,6 | 6,0 | 7,0 | 4,25 | 4,5 | 3,5 |
| $K_2O$ | | 0,2 | 6,9 | 5,0 | 6,05 | 7,5 | 9,0 |
| $MgO$ | 4,1 | | 4,2 | 7,0 | 2,05 | 1,5 | 1,0 |
| $CaO$ | 9,5 | | 3,5 | 9,0 | 7,2 | 8,5 | 6,0 |
| $SrO$ | | | 8,0 | 3,0 | 9,15 | 9,0 | 10,5 |
| $BaO$ | | | 3,8 | 2,0 | 5,75 | | |
| $T_l$ (°C) | 507 | 510 | 606 | 600 | 612 | 606 | 603 |
| $T(log\eta=7,6)$ (°C) | 725 | 821 | | | | | |
| $\alpha$ (x$10^{-7}$/°C) | 88,5 | 32 | 81,5 | 84 | 81,5 | 82,8 | 81,8 |
| Log $\rho$ ($\Omega$.cm) (à 250°C) | 6,6 | | 9,7 | 9,65 | 10,7 | | |
| D.G.G. (mg) | 30 | | | | | | |
| $T(log\eta=1,6)$ (°C) | 1550 | >1800 | 1554 | 1450 | 1539 | 1570 | 1630 |
| $T(log\eta=3,5)$ (°C) | 1085 | | 1192 | 1120 | 1172 | 1177 | 1221 |
| $T_{liquidus}$ (°C) | 1020 | | | | 1120 | 1155 | 1100 |

n° 4 à 7 - Compositions théoriques

**Revendications**

1. Composition de verre destinée à la fabrication de substrat ou de plaque thermiquement stable, **caractérisée en ce qu'**elle comprend les constituants ci-après dans les proportions pondérales suivantes :

| $SiO_2$ | 45 à 63 % |
|---|---|
| $Al_2O_3$ | 0 à 18 % |

(suite)

| | |
|---|---|
| ZrO$_2$ | 6,5 à 20 % |
| Na$_2$O | 2 à 12 % |
| K$_2$O | 3,5 à 9 % |
| CaO | 1 à 13% |
| MgO | 0 à 8 % |

la somme des teneurs des oxydes SiO$_2$, Al$_2$O$_3$ et ZrO$_2$ demeurant égale ou inférieure à 70%, la somme des teneurs des oxydes alcalins Na$_2$O et K$_2$O étant égale ou supérieure à 8%, ladite composition comprenant éventuellement les oxydes BaO et/ou SrO dans des proportions telles que :

$$11\% \leq MgO + CaO + BaO + SrO \leq 24\%$$

ladite composition présentant une température inférieure de recuisson (strain point) égale ou supérieure à 530°C et un coefficient de dilatation ($\alpha_{25\text{-}300°C}$) compris entre 80 et 95.10$^{-7}$/°C.

**2.** Composition de verre selon la revendication 1, **caractérisée en ce qu'**elle comprend les constituants ci-après dans les proportions pondérales suivantes :

| | |
|---|---|
| SiO$_2$ | 45 à 63 % |
| Al$_2$O$_3$ | 0 à 18 % |
| ZrO$_2$ | 6,5 à 20 % |
| Na$_2$O | 4 à 12 % |
| K$_2$O | 3,5 à 7 % |
| CaO | 1 à 13 % |
| MgO | 1 à 8 % |

**3.** Composition de verre selon l'une quelconque des revendications précédentes, **caractérisée en ce que** la somme des teneurs des oxydes Al$_2$O$_3$ et ZrO$_2$ qu'elle contient est égale ou supérieure à 8%.

**4.** Composition de verre selon l'une quelconque des revendications 1 à 3, **caractérisée en ce que** la teneur en ZrO$_2$ est comprise entre 8 et 15%.

**5.** Composition de verre selon l'une quelconque des revendications précédentes, **caractérisée en ce que** sa teneur pondérale en SiO$_2$ est comprise entre 45 et 59%.

**6.** Composition de verre selon l'une quelconque des revendications précédentes, **caractérisée en ce qu'**elle comprend les constituants ci-après dans les proportions pondérales suivantes :

| | |
|---|---|
| SiO$_2$ | 45 à 59% |
| Al$_2$O$_3$ | 0 à 10% |
| ZrO$_2$ | 8 à 15% |
| Na$_2$O | 4 à 10% |
| K$_2$O | 3,5 à 7% |
| CaO | 1 à 12% |
| MgO | 1 à 7% |

la somme des teneurs des oxydes alcalins demeurant égale ou supérieure à 10%, ladite composition pouvant comprendre également les oxydes BaO et/ou SrO dans des proportions telles que :

$$14\% \leq CaO + MgO + BaO + SrO \leq 22\%$$

ladite composition présentant une température inférieure de recuisson (strain point) égale ou supérieure à environ 550°C et un coefficient de dilatation ($\alpha_{25\text{-}300°C}$) compris entre 82 et 95.$10^{-7}$/°C.

7. Composition de verre selon l'une des revendications précédentes, **caractérisée en ce que** la somme des teneurs des oxydes $ZrO_2$ et $Al_2O_3$ qu'elle contient est comprise entre 8 et 22%.

8. Composition de verre selon l'une quelconque des revendications précédentes, **caractérisée en ce qu'**elle présente une viscosité correspondant à $\log\eta$ = 1,6 à une température égale ou inférieure à 1630°C et, de préférence, à 1590°C.

9. Composition de verre selon l'une quelconque des revendications précédentes, **caractérisée en ce qu'**elle présente une viscosité correspondant à $\log\eta$ = 3,5 à une température égale ou inférieure à 1220°C et, de préférence, à 1170°C.

10. Utilisation des compositions de verre telles que définies par l'une quelconque des revendications 1 à 6 pour la fabrication de substrat pour écran émissif à partir d'une feuille de verre découpée dans un ruban de verre obtenu par flottage du verre sur un bain de métal fondu.

11. Utilisation des compositions de verre telles que définies par l'une quelconque des revendications 1 à 6 pour la fabrication de vitrage anti-feu réalisé à partir de plaque ou feuille de verre découpée dans un ruban de verre obtenu par flottage du verre sur un bain de métal fondu.

**Patentansprüche**

1. Glaszusammensetzung, die zur Herstellung eines Substrats oder einer hitzebeständigen Scheibe vorgesehen ist, **dadurch gekennzeichnet, dass** sie folgende Bestandteile mit nachstehenden Gewichtsanteilen umfasst:

| | |
|---|---|
| $SiO_2$ | 45 bis 63 %, |
| $Al_2O_3$ | 0 bis 18 %, |
| $ZrO_2$ | 6,5 bis 20 %, |
| $Na_2O$ | 2 bis 12 %, |
| $K_2O$ | 3,5 bis 9 %, |
| CaO | 1 bis 13 %, |
| MgO | 0 bis 8 %, |

wobei die Summe der Gehalte an den Oxiden $SiO_2$, $Al_2O_3$ und $ZrO_2$ gleich oder unter 70 % bleibt und die Summe der Gehalte an dem Alkalioxiden $Na_2O$ und $K_2O$ gleich oder größer als 8 % ist und die Zusammensetzung gegebenenfalls die Oxide BaO und/oder SrO in solchen Anteilen enthält, dass

$$11\ \% \leq MgO + CaO + BaO + SrO \leq 24\ \%,$$

wobei die Zusammensetzung eine untere Kühlungstemperatur (strain point) von gleich oder größer als 530 °C und einen Ausdehnungskoeffizienten ($\alpha_{25\text{-}300\ °C}$) von 80 bis 95·$10^{-7}$/°C aufweist.

2. Glaszusammensetzung nach Anspruch 1, **dadurch gekennzeichnet, dass** sie folgende Bestandteile mit nachstehenden Gewichtsanteilen umfasst:

| | |
|---|---|
| $SiO_2$ | 45 bis 63 %, |
| $Al_2O_3$ | 0 bis 18 %, |
| $ZrO_2$ | 6,5 bis 20 %, |
| $Na_2O$ | 4 bis 12 %, |
| K20 | 3,5 bis 7 %, |
| CaO | 1 bis 13 %, |
| MgO | 1 bis 8 %. |

3.  Glaszusammensetzung nach einem der vorhergehenden Ansprüche, **dadurch gekennzeichnet, dass** die Summe der Gehalte an den Oxiden $Al_2O_3$ und $ZrO_2$, die sie enthält, gleich oder größer als 8 % ist.

4.  Glaszusammensetzung nach einem der Ansprüche 1 bis 3, **dadurch gekennzeichnet, dass** der $ZrO_2$-Gehalt 8 bis 15 % beträgt.

5.  Glaszusammensetzung nach einem der vorhergehenden Ansprüche, **dadurch gekennzeichnet, dass** ihr Gewichtsgehalt an $SiO_2$ 45 bis 59 % beträgt.

6.  Glaszusammensetzung nach einem der vorhergehenden Ansprüche, **dadurch gekennzeichnet, dass** sie folgende Bestandteile mit nachstehenden Gewichtsanteilen umfasst:

| | |
|---|---|
| $SiO_2$ | 45 bis 59 %, |
| $Al_2O_3$ | 0 bis 10 %, |
| $ZrO_2$ | 8 bis 15 %, |
| $Na_2O$ | 4 bis 10 %, |
| $K_2O$ | 3,5 bis 7 %, |
| CaO | 1 bis 12 %, |
| MgO | 1 bis 7 %, |

wobei die Summe der Gehalte an den Alkalioxiden gleich oder größer als 10 % bleibt und die Zusammensetzung auch die Oxide BaO und/oder SrO in solchen Anteilen enthalten kann, dass

$$14 \% \leq CaO + MgO + BaO + SrO \leq 22 \%,$$

wobei die Zusammensetzung eine untere Kühlungstemperatur (strain point) von gleich oder größer als etwa 550 °C und einen Ausdehnungskoeffizienten ($\alpha_{25\text{-}300\,°C}$) von 82 bis 95·$10^{-7}$/°C aufweist.

7.  Glaszusammensetzung nach einem der vorhergehenden Ansprüche, **dadurch gekennzeichnet, dass** die Summe der Gehalte an den Oxiden $ZrO_2$ und $Al_2O_3$, die sie enthält, 8 bis 22 % beträgt.

8.  Glaszusammensetzung nach einem der vorhergehenden Ansprüche, **dadurch gekennzeichnet, dass** sie eine Viskosität aufweist, die $\log\eta = 1,6$ bei einer Temperatur von gleich oder unter 1630 °C und vorzugsweise 1590 °C entspricht.

9.  Glaszusammensetzung nach einem der vorhergehenden Ansprüche, **dadurch gekennzeichnet, dass** sie eine Viskosität aufweist, die $\log\eta = 3,5$ bei einer Temperatur von gleich oder unter 1220 °C und vorzugsweise 1170 °C entspricht.

10. Verwendung der in einem der Ansprüche 1 bis 6 definierten Glaszusammensetzungen zur Herstellung eines Substrats für einen emittierenden Bildschirm, ausgehend von einer Glasscheibe, die aus einem Glasband zugeschnitten worden ist, das durch das Floatglasverfahren auf einem geschmolzenen Metallbad hergestellt wurde.

11. Verwendung der in einem der Ansprüche 1 bis 6 definierten Glaszusammensetzungen zur Herstellung einer Brandschutzverglasung, die aus einer Glasplatte oder -scheibe hergestellt wird, die aus einem Glasband zugeschnitten worden ist, das durch das Floatglasverfahren auf einem geschmolzenen Metallbad erhalten wurde.

**Claims**

1.  Glass composition for use in the manufacture of a thermally stable plate or substrate, characterized in that it comprises the following constituents in the weight proportions given hereinafter:

| | |
|---|---|
| $SiO_2$ | 45 to 63% |
| $Al_2O_3$ | 0 to 18% |

(continued)

| | |
|---|---|
| $ZrO_2$ | 6.5 to 20% |
| $Na_2O$ | 2 to 12% |
| $K_2O$ | 3.5 to 9% |
| CaO | 1 to 13% |
| Mg0 | 0 to 8% |

the sum of the contents of the oxides $SiO_2$, $Al_2O_3$ and $ZrO_2$ remaining equal to or below 70%, the sum of the contents of the alkali metal oxides $Na_2O$ and $K_2O$ being equal to or higher than 8%, said composition optionally incorporating the oxides BaO and/or SrO in proportions such that:

$$11\% \leq MgO + CaO + BaO + SrO \leq 24\%$$

said composition having a strain point equal to or above 530°C and an expansion coefficient ($\alpha_{25\text{-}300°C}$) between 80 and $95.10^{-7}/°C$.

2. Glass composition according to claim 1, characterized in that it comprises the following constituents in the weight proportions given hereinafter:

| | |
|---|---|
| $SiO_2$ | 45 to 63% |
| $Al_2O_3$ | 0 to 18% |
| $ZrO_2$ | 6.5 to 20% |
| $Na_2O$ | 4 to 12% |
| $K_2O$ | 3.5 to 7% |
| CaO | 1 to 13% |
| MgO | 1 to 8% |

3. Glass composition according to any one of the preceding claims, characterized in that the sum of the contents of the oxides $Al_2O_3$ and $ZrO_2$ contained therein is equal to or above 8%.

4. Glass composition according to any one of the claims 1 to 3, characterized in that the $ZrO_2$ content is between 8 and 15%.

5. Glass composition according to any one of the preceding claims, characterized in that the weight content of $SiO_2$ is between 45 and 59%.

6. Glass composition according to any one of the preceding claims, characterized in that it comprises the following constituents in the weight proportions given hereinafter:

| | |
|---|---|
| $SiO_2$ | 45 to 59% |
| $Al_2O_3$ | 0 to 10% |
| $ZrO_2$ | 8 to 15% |
| $Na_2O$ | 4 to 10% |
| $K_2O$ | 3.5 to 7% |
| CaO | 1 to 12% |
| MgO | 1 to 7% |

the sum of the contents of the alkali metal oxides remaining equal to or above 10% and said composition can also incorporate the oxides BaO and/or SrO in proportions such that:

$$14\% \leq CaO + MgO + BaO + SrO \leq 22\%$$

said composition having a strain point equal to or above approximately 550°C and an expansion coefficient ($\alpha_{25\text{-}300°C}$) between 82 and 95.10$^{-7}$/°C.

7. Glass composition according to any one of the preceding claims, characterized in that the sum of the contents of the oxides $ZrO_2$ and $Al_2O_3$ contained therein is between 8 and 22%.

8. Glass composition according to any one of the preceding claims, characterized in that it has a viscosity corresponding to log$\eta$ = 1.6 at a temperature equal to or below 1630°C and preferably 1590°C.

9. Glass composition according to any one of the preceding claims, characterized in that it has a viscosity corresponding to log$\eta$ = 3.5 at a temperature equal to or below 1220°C and preferably 1170°C.

10. Use of glass compositions as defined by any one of the claims 1 to 6 for the manufacture of a substrate for an emissive screen from a glass sheet cut in a glass ribbon obtained by floating glass on a molten metal bath.

11. Use of glass compositions as defined by any one of the claims 1 to 6 for the manufacture of fire-retarding glazings produced from a glass sheet or plate cut from a glass ribbon obtained by floating glass on a molten metal bath.